# EUROPEAN PATENT APPLICATION

(11) **EP 4 510 105 A1**
(43) Date of publication of application: **19.02.2025**
(21) Application number: 23779025.8
(22) Date of filing: 20.02.2023
(51) Int. Cl.: G08G 1/09, G08G 1/00

(54) **VEHICLE AND SERVER**

(30) Priority: 28.03.2022 JP 2022052506
(71) Applicant: Softbank Corp., Tokyo 105-7529 (JP)
(72) Inventor: KOMIYAMA, Yosuke, Tokyo 105-7529 (JP); ENOMOTO, Koyo, Tokyo 105-7529 (JP)
(74) Representative: Patentanwaltskanzlei WILHELM & BECK
(86) International application number: PCT/JP2023/005975
(87) International publication number: WO 2023/188995

(57) **Abstract**

In a digital twin system including a vehicle and a server that generates a digital twin of the vehicle, a reduction in volume of communication traffic between the vehicle and the server is achieved without a decrease in accuracy of the digital twin. A vehicle (101) includes: a plurality of sensors (S); an acquisition section (11) that acquires detection data from the respective plurality of sensors; and a communication section (2) that transmits at least some of the acquired detection data to a server (102) which predicts a future state of the vehicle by input of the detection data, and that receives, from the server, a behavioral indication based on prediction, after transmitting the detection data, the communication section transmitting subsequent detection data on the basis of a determination result indicating whether it is possible to transmit the subsequent detection data.

## Description

### Technical Field

The present invention relates to a vehicle and a server.

### Background Art

A technique related to a digital twin system is conventionally known. The digital twin system reproduces a state of a vehicle in a virtual space on the basis of detection data output by various sensors of the vehicle. For example, Patent Literature 1 discloses a method including the steps of: generating a digital twin of a vehicle; receiving digital data that is recorded by a sensor and that describes a state of the vehicle which is present in a real world and behavior of the vehicle which is traveling in the real world; and updating the digital twin of the vehicle on the basis of the digital data so that the digital twin matches the state and the behavior.

### Citation List

### [Patent Literature]

[Patent Literature 1]
Japanese Patent Application Publication Tokukai No. 2020-013557

### Summary of Invention

### Technical Problem

In a digital twin system, as a state of a vehicle is to be reproduced with higher accuracy, a server that generates a virtual space requires more real-time information pertaining to the state of the vehicle. However, according to such a conventional technique as described above, an increase in reproduction accuracy results in an increase in volume of communication traffic between the vehicle and the server. This may make it impossible to transmit sufficient data to the server. In contrast, an attempt to prevent or reduce the volume of communication traffic between the vehicle and the server causes the state of the vehicle to be reproduced in the virtual space with lower accuracy.

### Solution to Problem

In order to solve the problem, a vehicle in accordance with an aspect of the present invention includes: a plurality of sensors; an acquisition section that acquires detection data from the respective plurality of sensors; and a communication section that transmits, to a server, at least some of the detection data acquired by the acquisition section, the server using a trained model constructed by machine learning to predict a future state of the vehicle by input of the detection data, and that receives, from the server, a behavioral indication based on prediction, after transmitting the detection data, the communication section transmitting subsequent detection data on the basis of a determination result indicating whether it is possible to transmit the subsequent detection data.

In order to solve the problem, a server in accordance with another aspect of the present invention includes: a communication section that receives, from a vehicle including a plurality of sensors and an acquisition section that acquires detection data from the respective plurality of sensors, detection data output by the plurality of sensors; a prediction section that uses a trained model constructed by machine learning to predict a future state of the vehicle on the basis of the detection data received by the communication section and that outputs a prediction result for the future state as prediction data; and an execution section that carries out a simulation regarding a traffic condition on the basis of the received detection data and traffic data of a traffic participant, after receiving the detection data, the communication section receiving subsequent detection data in accordance with a result of determining whether it is possible for the vehicle to transmit the subsequent detection data.

### Brief Description of Drawings

Fig. 1 is a block diagram illustrating a digital twin system constituted by a vehicle and a server in accordance with an embodiment of an aspect of the present invention.
Fig. 2 is a block diagram illustrating a functional configuration of the vehicle of the digital twin system.
Fig. 3 is a perspective view illustrating the vehicle and a sensor of the vehicle.
Fig. 4 is a block diagram illustrating a functional configuration of the server in accordance with the embodiment.
Fig. 5 is a diagram illustrating a trained model used by the digital twin system for prediction.
Fig. 6 is a timing diagram illustrating an operation by a digital twin system in accordance with the embodiment.
Fig. 7 is a view describing some of effects of the present invention.

### Description of Embodiments

### <Embodiment>

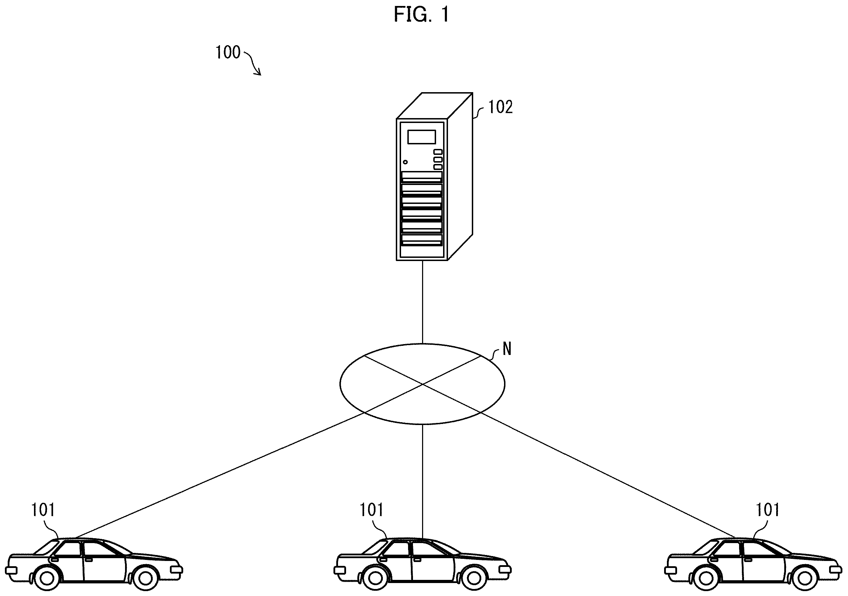

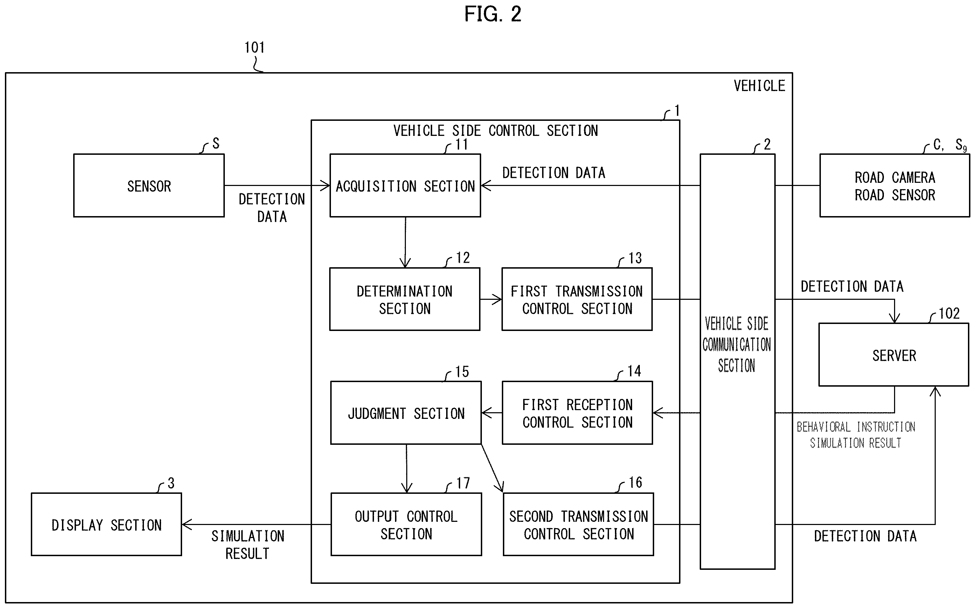

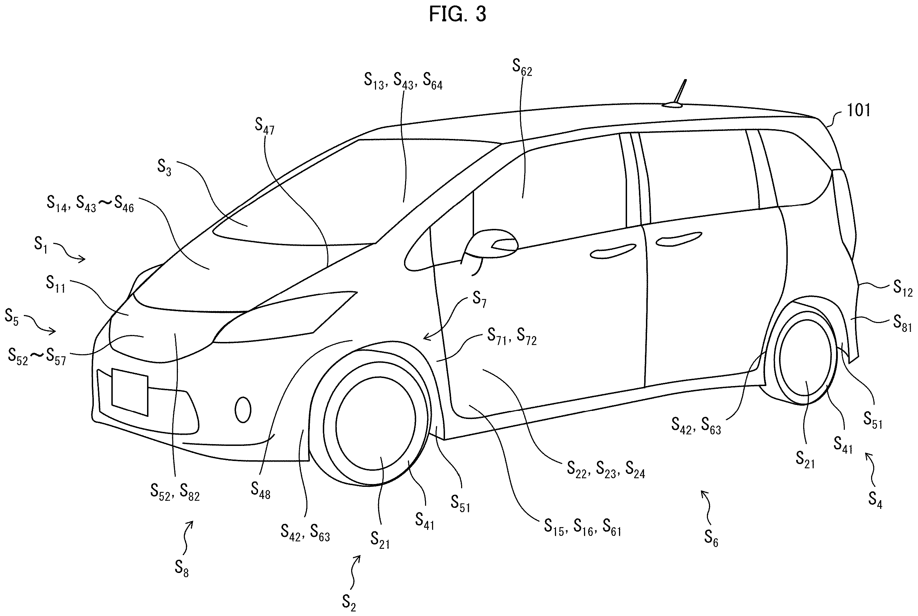

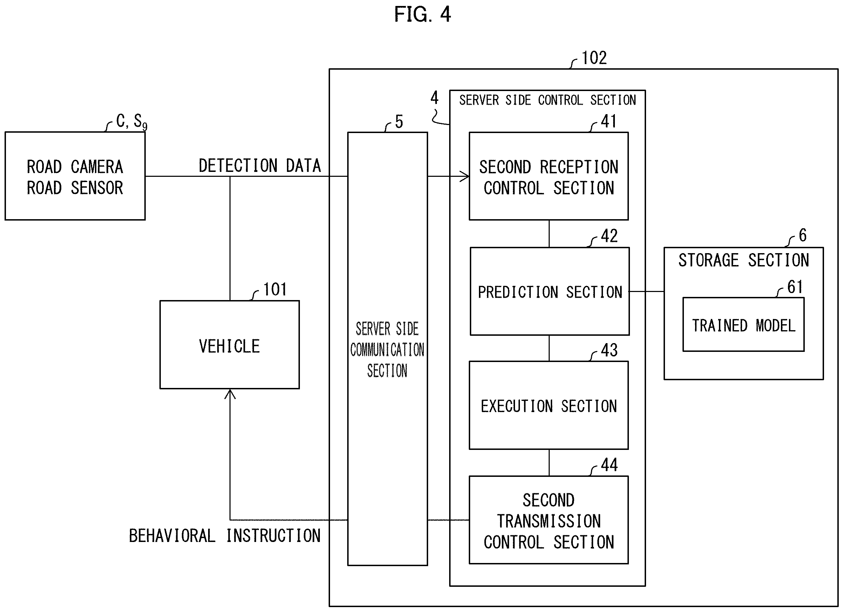

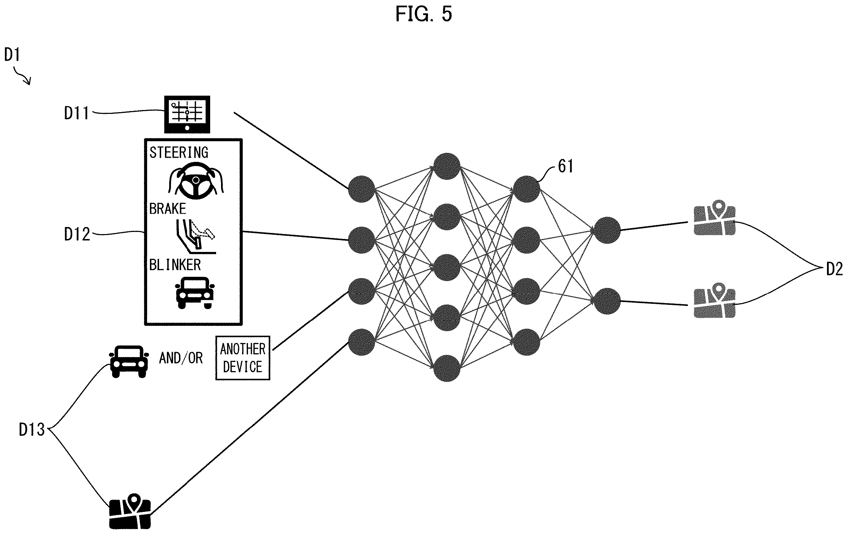

First, the following description will discuss an embodiment of the present invention in detail. Fig. 1 is a block diagram illustrating a digital twin system 100. Fig. 2 is a block diagram illustrating a functional configuration of a vehicle 101. Fig. 3 is a diagram illustrating a trained model used by the digital twin system 100 for prediction. Fig. 4 is a perspective view illustrating the vehicle 101 and a sensor of the vehicle 101. Fig. 5 is a block diagram illustrating a functional configuration of a server 102.

### [Configuration of digital twin system 100]

The digital twin system 100 reproduces, in a virtual space, a digital twin indicating a state of the vehicle 101. The digital twin system 100 includes a plurality of vehicles 101 and the server 102 as illustrated in Fig. 1. These are connected to each other via a communication network N.

### [Vehicle 101]

The vehicle 101 includes a plurality of types of sensors S, a vehicle side control section 1, a vehicle side communication section 2 (communication section), and a display section 3 as illustrated in Fig. 2.

### (Vehicle side communication section 2)

The vehicle side communication section 2 transmits and receives, for example, various data and various signals in a wired or wireless manner with another device (e.g., the server 102 described later, a terminal device possessed by or attached to a traffic participant other than the vehicle 101 (a pedestrian or a person on a bicycle), a drone, a road camera C installed on the road, a road sensor S9 installed on the road, etc.). The vehicle side communication section 2 in accordance with the present embodiment is constituted by a communication module.

### (Display section 3)

The display section 3 is provided at a position at which a driver of the vehicle 101 can visually recognize the display section 3. Further, the display section 3 displays a screen based on a signal from the vehicle side control section 1.

### (Vehicle side control section 1)

The vehicle side control section 1 includes an acquisition section 11, a determination section 12, a first transmission control section 13, a first reception control section 14, a judgment section 15, a second transmission control section 16, and an output control section 17 as illustrated in Fig. 2.

### · Acquisition section 11

The acquisition section 11 in accordance with the present embodiment acquires the detection data D1 from the respective plurality of types of sensors S. Further, the acquisition section 11 in accordance with the present embodiment acquires the detection data D1 from the respective sensors S via an input IF (not illustrated) to which the sensors S are connected. Furthermore, the acquisition section 11 in accordance with the present embodiment acquires the detection data D1 from the another device (the road camera C, the road sensor S9, etc.). The acquisition section 11 in accordance with the present embodiment acquires the detection data D1 from the another device via the vehicle side communication section 2. Moreover, the acquisition section 11 in accordance with the present embodiment repeatedly acquires various types of the detection data D1 every time a certain time period (e.g., in a range of 50 msec to 150 msec) has elapsed. The certain time period can be set to any length.

The sensors S of the vehicle 101 include, for example, at least one selected from the group consisting of a position (distance/angle) sensor S1, a speed sensor S2, an acceleration sensor S3, a pressure sensor S4, a temperature sensor S5, a force (torque) sensor S6, a flowmeter S7, and a gas sensor S8 as illustrated in Fig. 3.

The position (distance/angle) sensor S1 includes at least one selected from the group consisting of a sensor S11 that detects a distance from an object present in the front, a sensor S12 that detects a distance from an object present in the rear, a sensor S13 that detects a rotation angle of a steering wheel, a sensor S14 that detects an inclination angle of a throttle valve, a sensor S15 that detects an inclination angle of an accelerator pedal, and a sensor S16 that detects an inclination angle of a brake pedal.

The speed sensor S2 includes at least one selected from the group consisting of a sensor S21 that detects a rotation speed of a wheel, a sensor S22 that detects a speed of a crankshaft, a sensor S23 that detects a speed of a camshaft, and a sensor S24 that detects a jet velocity of a jet pump in a diesel engine.

The acceleration sensor S3 detects acceleration (impact) acting on a vehicle body.

The pressure sensor S4 includes at least one selected from the group consisting of a sensor S41 that detects a tire pressure, a sensor S42 that detects a brake pressure, a sensor S43 that detects a hydraulic reservoir pressure in power steering, a sensor S44 that detects a suction pressure, a sensor S45 that detects a charging pressure, a sensor S46 that detects a fuel pressure, a sensor S47 that detects a refrigerant pressure in air conditioning, and a sensor S48 that detects a modulation pressure in an automatic transmission.

The temperature sensor S5 includes at least one selected from the group consisting of a sensor S51 that detects a tire temperature, a sensor S52 that detects an air supply temperature, a sensor S53 that detects an ambient temperature, a sensor S54 that detects an internal temperature, a sensor S55 that detects an evaporator temperature in air conditioning, a sensor S56 that detects a coolant temperature, and a sensor S57 that detects an engine oil temperature.

The force (torque) sensor S6 includes at least one selected from the group consisting of a sensor S61 that detects a pedaling force, a sensor S62 that detects a body weight of an occupant, a sensor S63 that detects torque acting on a drive shaft, and a sensor S64 that detects torque acting on a steering wheel.

The flowmeter S7 includes at least one selected from the group consisting of a sensor S71 that detects a flow rate of fuel and an amount of the fuel supplied to an engine and a sensor S72 that detects an amount of air sucked by the engine.

The gas sensor S8 includes at least one selected from the group consisting of a sensor S81 that detects a composition of exhaust gas and a sensor S82 that detects a hazardous substance contained in supplied air.

Note that the above-listed various sensors S are publicly known as disclosed in, for example, the following Web pages:
· Vehicle sensors functions and types https://innovationdiscoveries.space/vehicle-sensors-functions-and-types/
· Automotive sensors: the design engineer's guide https://www.avnet.com/wps/portal/abacus/solutions/market s/automotive-and-transportation/automotive/communications-and-connectivity/automotive-sensors/

Note that the acquisition section 11 may be configured to acquire the detection data D1 from the respective plurality of vehicles 101. The acquisition section 11 may alternatively be configured to acquire, from the vehicle 101 via a storage device (not illustrated), the detection data D1 (once stored in the storage device). The acquisition section 11 may alternatively be configured to acquire the detection data D1 via a recording medium or the like instead of the vehicle side communication section 2. The acquisition section 11 may alternatively be configured to acquire the detection data D1 from the traffic participant other than the vehicle 101, the drone, etc. The acquisition section 11 may alternatively be configured to acquire the detection data D1 via the vehicle side communication section 2 from at least one selected from the group consisting of the road camera C and the road sensor S9, as illustrated in Fig. 2. The acquisition section 11 may alternatively be configured to acquire the detection data D1 that is route information set in a navigation system of the vehicle 101 or the terminal device. The acquisition section 11 may alternatively be configured to acquire the detection data D1 that is an image(s) captured by an event data recorder and/or a rear view camera of the vehicle 101. The acquisition section 11 may alternatively be configured to acquire the detection data D1 that is information (such as drowsiness of a driver) determined by the vehicle 101 on the basis of the detection data D1.

The determination section 12 determines whether it is possible to transmit the detection data D1. The vehicle 101 that includes such a determination section 12 enables quick determination. The determination section 12 in accordance with the present embodiment determines, as whether it is possible to transmit information, whether a future predicted by the server 102 described later is reached. The expression "the future is reached" may indicate that a time immediately before (e.g., several seconds before) the future has been reached, or may indicate that the future has been actually reached. The determination section 12 may be configured to include a function of a timer and use the function to determine whether the future is reached. Further, in a case where the server 102 described later can use information from a device different from the vehicle 101 to specify usage information, the determination section 12 may be configured to determine, in response to an instruction from the server 102, that the future has been reached, and transmit the usage information. Examples of a case where the information from the device different from the vehicle 101 can be used to specify the usage information include a case where the server 102 can directly acquire the detection data D1 such as position information, a speed, etc. of the vehicle 101 from the road camera C, the road sensor S9, etc. Further, the determination section 12 in accordance with the present embodiment repeatedly carries out such determination.

### · First transmission control section 13

The first transmission control section 13 transmits, to the server 102, at least some of the detection data D1 acquired by the acquisition section 11 (e.g., only the detection data D1 that has been determined by the determination section 12 to be capable of being transmitted). Further, the first transmission control section 13 controls the vehicle side communication section 2 on the basis of a determination result from the determination section 12. With this, in a case where the determination section 12 determines that the predicted future is reached, the vehicle side communication section 2 wirelessly transmits at least some of the detection data D1 to the server 102.

Further, as described earlier, the determination section 12 in accordance with the present embodiment repeatedly carries out determination. Thus, after transmitting the detection data D1, the vehicle side communication section 2 in accordance with the present embodiment wirelessly transmits subsequent detection data D1 on the basis of a determination result indicating whether it is possible to transmit the subsequent detection data D1.

Furthermore, as described earlier, the determination section 12 in accordance with the present embodiment determines, as whether it is possible to transmit information, whether the predicted future is reached. Thus, in a case where the determination section 12 determines that the predicted future is reached, the vehicle side communication section 2 in accordance with the present embodiment wirelessly transmits the detection data D1 to the server 102. This makes it unnecessary, during a period until the predicted future is reached, to transmit data to the server 102, so that a volume of communication traffic between the vehicle 101 and the server 102 can be reduced. Note that, in a case where the server 102 can directly acquire the detection data D1 from the road camera C, the road sensor S9, etc., the first transmission control section 13 may control the vehicle side communication section 2 so as to stop transmission of the detection data D1.

### · First reception control section 14

The first reception control section 14 controls the vehicle side communication section 2 so as to receive, from the server 102, a behavioral indication based on prediction. The behavioral indication indicates, for example, a future position, speed, acceleration, etc. of the vehicle 101. Further, the first reception control section 14 controls the vehicle side communication section 2 so as to receive a simulation result (digital twin) from the server 102. The digital twin mentioned here includes both the meaning that a simulation is carried out in the server 102 and the meaning that a simulation is carried out and a result of the simulation is fed back to the vehicle 101.

### · Judgment section 15

The judgment section 15 judges whether traveling based on the behavioral indication received by the vehicle side communication section 2 is possible. Specifically, by comparing details of the behavioral indication with a current state of the vehicle 101 which current state is based on the detection data D1 immediately after acquisition of the detection data D1, the judgment section 15 judges whether a position in accordance with the behavioral indication can be reached at a time point at which the future is reached, whether the speed will reach (can be lowered to) a speed in accordance with the behavioral indication at the time point at which the future is reached, etc.

### · Second transmission control section 16

The second transmission control section 16 controls the vehicle side communication section 2 on the basis of a judgment result from the judgment section 15. With this, the vehicle side communication section 2 transmits the detection data D1 to the server 102 in a case where the judgment section 15 judges that traveling based on the behavioral indication is impossible.

### · Output control section 17

The output control section 17 outputs the received behavioral indication. The output control section 17 in accordance with the present embodiment controls the display section 3 so as to display the behavioral indication. Further, the output control section 17 controls the display section 3 so as to display the simulation result received from the server 102. The output control section 17 may control a speaker (not illustrated) so as to output a voice.

### · Others

Note that the vehicle 101 may include an operation control section instead of the display section 3 and the output control section 17 or in addition to the display section 3 and the output control section 17. The operation control section automatically controls, on the basis of the simulation result received from the server 102, at least some of operations carried out by the vehicle 101. This allows traffic information to be more quickly provided to the operation control section. Thus, the operation control section can carry out operation with higher safety. The vehicle side control section 1 may further include a comparison section that compares a future state based on the behavioral indication received from the server 102 with a current state based on the detection data D1 acquired by the acquisition section 11. In this case, the determination section 12 of the vehicle 101 may be configured to determine, as whether it is possible to transmit the usage information, whether an error which is not less than a threshold has occurred between the future state based on the behavioral indication received from the server 102 and the current state based on the detection data D1 acquired by the acquisition section 11.

### [Server 102]

The server 102 predicts a future state of the vehicle 101 by input of the detection data D1. The server 102 includes a server side control section 4, a server side communication section 5, and a storage section 6 as illustrated in Fig. 4.

### (Server side communication section 5)

The server side communication section 5 transmits and receives, for example, various data and various signals in a wired or wireless manner with another device (e.g., the vehicle 101, the terminal device possessed by the traffic participant other than the vehicle 101, the drone, the road camera C, the road sensor S9, etc.). The server side communication section 5 in accordance with the present embodiment is constituted by a communication module.

### (Storage section 6)

The storage section 6 stores a trained model 61. The trained model 61 in accordance with the present embodiment is configured to generate prediction data D2 on the basis of a plurality of pieces of the detection data D1. The detection data D1 includes, as illustrated in Fig. 5, prior information D11 that is set before traveling, event information D12 that is generated in response to occurrence of an event, and update information D13 that is periodically updated. The prior information D11 includes, for example, route information of a navigation system. The event information D12 includes, for example, braking information pertaining to braking of the vehicle 101. The braking information includes, for example, steering information indicating that a steering wheel has been operated, brake information indicating that a brake has been applied, and blinker information indicating that a blinker has been turned on. The update information D13 includes, for example, a position of the vehicle 101, a speed of the vehicle 101, and acceleration/deceleration of the vehicle 101. The update information D13 may be from the sensors S of the vehicle 101 or may be from the road camera C and/or the road sensor S9. The prediction data D2 includes, for example, future traffic information (e.g., the position, etc.) of the vehicle 101.

The trained model 61 in accordance with the present embodiment is constructed by machine learning (e.g., deep learning) in which training data is a set of (i) the detection data D1 obtained in the past and (ii) traffic information obtained when the detection data D1 is obtained or in a situation similar to that when the detection data D1 is obtained. Note that the trained model 61 may be configured to generate other prediction data D2 different from the prediction data D2 and serving as a candidate.

### (Server side control section 4)

The server side control section 4 includes a second reception control section 41, a prediction section 42, an execution section 43, and a third transmission control section 44.

### · Second reception control section 41

The second reception control section 41 controls the server side communication section 5 so that the server side communication section 5 receives the detection data D1 from the vehicle 101. Further, the second reception control section 41 in accordance with the present embodiment controls the server side communication section 5 so as to receive the detection data D1 from the road camera C and/or the road sensor S9. As described earlier, after wirelessly transmitting the detection data D1, the vehicle side communication section 2 of the vehicle 101 in accordance with the present embodiment wirelessly transmits subsequent detection data D1 in accordance with a determination result that the subsequent detection data D1 is to be transmitted. Thus, after receiving the detection data D1, the second reception control section 41 controls the vehicle side communication section 2 so as to wirelessly receive subsequent detection data D1 which the vehicle 101 has transmitted in accordance with the determination result that the subsequent detection data D1 is to be transmitted. Thus, after receiving the detection data D1, the server side communication section 5 receives the subsequent detection data D1.

### · Prediction section 42

The prediction section 42 uses the trained model 61 to predict the state of the vehicle 101 in a future on the basis of the detection data D1 and outputs a prediction result for the future state as the prediction data D2. The future refers to, for example, a time after a first certain time period from a time at which the server 102 acquires the detection data D1. The first certain time period can be set to any length (e.g., in a range of 500 msec to 700 msec) that exceeds a cycle in which the detection data D1 is acquired. The first certain time period may include a time period from when the server 102 transmits the prediction data D2 to when the vehicle 101 receives the prediction data. The prediction section 42 uses the trained model 61 stored in the storage section 6 to predict the future. The prediction data D2 includes, for example, a future position of the vehicle, etc. Note that the prediction section 42 may be configured to output, instead of the prediction data D2 indicating a state at a certain moment in the future, the prediction data D2 having a temporal width. The prediction section 42 may alternatively be configured to request the vehicle 101, immediately before the predicted future is reached, to transmit the detection data D1 for new prediction. The prediction section 42 may alternatively be configured to output, as the prediction data D2 indicating the state at a certain moment in the future, the prediction data D2 having a spatiotemporal width.

### · Execution section 43

The execution section 43 carries out a simulation regarding a traffic condition on the basis of the detection data D1 and traffic data of the traffic participant present around the vehicle 101, and generates a behavioral indication based on a simulation result. The traffic data is, for example, various data that have been transmitted from the terminal device possessed by or attached to the traffic participant, the drone, the road camera C installed on the road, the road sensor S9 installed on the road, etc. Note that the simulation result may include not only information pertaining to the vehicle 101 but also information pertaining to an environment surrounding the vehicle 101 (for example, information pertaining to another traffic participant, etc.). Further, the execution section 43 that can directly acquire detection data D1 from a device different from the vehicle 101 may be configured to carry out the simulation on the basis of the detection data D1 instead of the usage information of the vehicle 101.

### · Third transmission control section 44

The third transmission control section 44 controls the server side communication section 5 in a case where the execution section 43 carries out the simulation. This allows the server side communication section 5 to wirelessly transmit, to at least one selected from the group consisting of the vehicle 101 and the terminal device possessed by the traffic participant, the behavioral indication generated by the execution section 43. This allows an occupant (traffic participant) of the vehicle 101 to be aware, by seeing the simulation result displayed on the display section 3 (display section of the terminal device), in what situation the occupant may be placed in the future. As a result, the occupant (traffic participant) of the vehicle 101 can drive (move) very safely with attention paid to a situation of which the occupant has been made aware. Further, such a configuration allows urban and human residential areas to be safe. This makes it possible to contribute to achievement of Goal 11 "Make cities and human settlements inclusive, safe, resilient and sustainable." of Sustainable Development Goals (SDGs).

### (Another configuration of server)

In a case where the determination section 12 of the vehicle 101 is configured to determine, as whether it is possible to transmit the usage information, whether the error which is not less than the threshold has occurred between the future state based on the behavioral indication received from the server 102 and the current state based on the detection data D1 acquired by the acquisition section 11, the trained model 61 may be configured to generate the prediction data D2 on the basis of the detection data D1 that has relatively fewer types (e.g., the update information D13 and map information D14) than the detection data D1 described earlier. Further, in that case, the trained model 61 may be configured to predict the state of the vehicle 101 in a relatively near future. The relatively near future refers to, for example, a time after a second certain time period from a time at which the server 102 acquires the detection data D1. The second certain time period can be set to any length (e.g., in a range of 350 msec to 450 msec) that exceeds the cycle in which the detection data D1 is acquired but does not exceed the first certain time period. Furthermore, the second certain time period may include the time period from when the server 102 transmits the prediction data D2 to when the vehicle 101 receives the prediction data. In this case, the state of the vehicle 101 in a near future which state is output by the trained model 61 serves as a predicted value of the detection data D1 after the second certain time period, the predicted value corresponding to the input detection data D1.

### [Another configuration of digital twin system 100]

The digital twin system 100 may include at least one selected from the group consisting of: a vehicle that has a function to output the detection data D1 but does not have a function to acquire the simulation result; and a vehicle that does not have the function to output the detection data D1 but has the function to acquire the simulation result.

### [Operation by digital twin system 100]

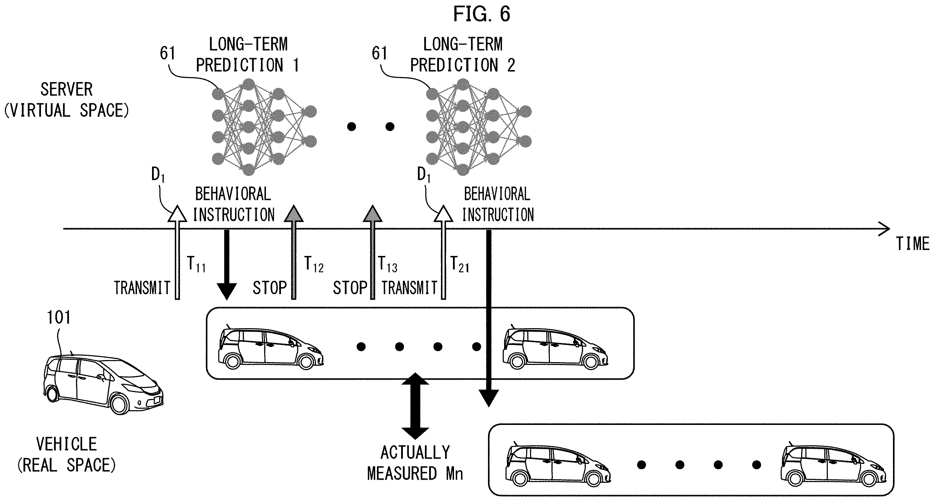

In a case where a certain event occurs in the vehicle 101 constituting the digital twin system 100, the vehicle 101 transmits the detection data D1 as illustrated in Fig. 6 (T11). Examples of the certain event include setting of the route information in the navigation system and generation of the detection data D1 by the various sensors S of the vehicle 101. A conventional vehicle repeats communication with the server 102 also thereafter (T12, T13 ...), whereas, after transmitting the detection data D1 at a time T11, the vehicle 101 does not transmit the detection data D1 until it is determined that a predicted future (T1t) is reached.

The server 102 that has received the detection data D1 uses the trained model 61 to output the prediction data D2 which indicates the state of the vehicle 101 in a future (T2t). The server 102 carries out a simulation on the basis of the output prediction data D2 and generates the behavioral indication that indicates the state of the vehicle 101 in the future (at a time T1t). The server 102 transmits the generated behavioral indication to the vehicle 101.

The vehicle 101 that has received the behavioral indication, for example, judges whether traveling based on the behavioral indication is possible, and/or outputs the behavioral indication. Further, in a case where the future (T1t) predicted last time has been reached (here, in a case where a time (T21) immediately before the future (T1t) predicted last time has been reached), the vehicle 101 transmits the detection data D1 to the server 102 again (T21). After transmitting the detection data D1 at the time T21, the vehicle 101 does not transmit the detection data D1 until it is determined that the predicted future (T2t) is reached.

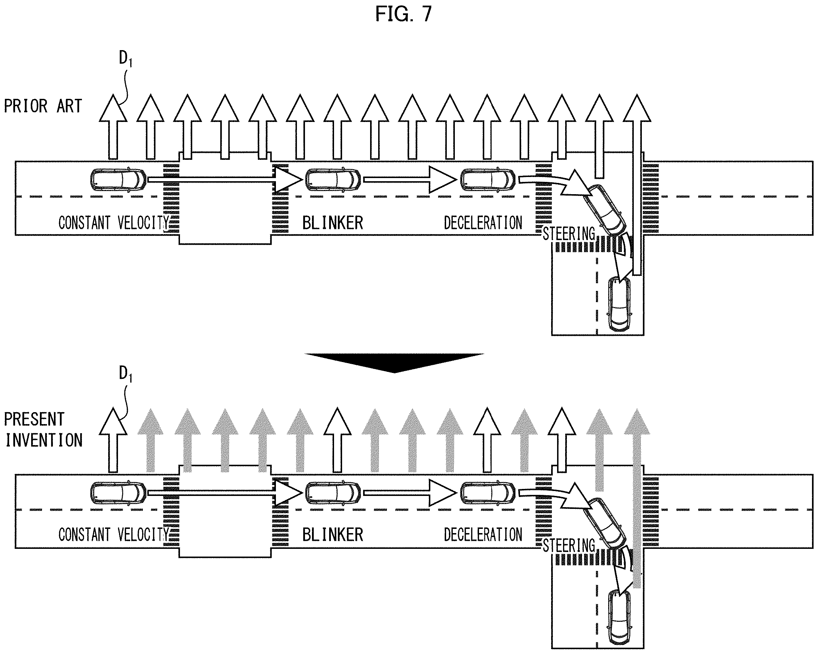

The server 102 that has received the detection data D1 uses the trained model 61 to output the prediction data D2 which indicates the state of the vehicle 101 in the future (T2t). The server 102 carries out the simulation on the basis of the output prediction data D2 and generates the behavioral indication that indicates the state of the vehicle 101 in the future (at a time T2t). The server 102 transmits the generated behavioral indication to the vehicle 101. Thereafter, the vehicle 101 and the server 102 repeat the operation as described earlier every time the future (T31 ...) predicted last time is reached. As a result, a conventional vehicle is configured to periodically transmit data as illustrated in an upper part of Fig. 7, whereas the vehicle 101 in accordance with the present embodiment transmits the detection data D1 at longer intervals as compared with the conventional vehicle as illustrated in a lower part of Fig. 7.

In a case where the determination section 12 of the vehicle 101 is configured to determine whether the error which is not less than the threshold has occurred between the future state (e.g., the above-described time after the first certain time period from the time at which the server 102 acquires the detection data D1) and the current state, the digital twin system 100 further operates as below. The vehicle 101 that has received the behavioral indication acquires the detection data D1 every time a certain time period has elapsed. The vehicle 101 that has received the behavioral indication repeatedly determines whether the error which is not less than the threshold has occurred between the future state based on the behavioral indication received from the server 102 and the current state based on the detection data D1 acquired by the acquisition section 11. In a case where the vehicle 101 that has received the behavioral instruction determines that the error which is not less than the threshold has occurred, the vehicle 101 transmits the detection data D1 to the server 102 without waiting for arrival of the time (T21) at which subsequent detection data D1 is transmitted.

In this case, the server 102 that has received the detection data D1 uses the trained model 61 to output the prediction data D2 after the above-described second certain time period (350 msec to 450 msec). The server 102 carries out the simulation on the basis of the output prediction data D2 and generates the behavioral indication that indicates the state of the vehicle 101 after the second certain time period. The server 102 transmits the generated behavioral indication to the vehicle 101.

The vehicle 101 that has received the behavioral indication, for example, judges whether traveling based on the behavioral indication is possible, and/or outputs the behavioral indication. The vehicle 101 that has received the behavioral indication repeatedly determines whether the error which is not less than the threshold has occurred between the future state based on the behavioral indication received from the server 102 and the current state based on the detection data D1 acquired by the acquisition section 11. In a case where a state in which it is determined that the error which is not less than the threshold has not occurred is continued for the second certain time period, the vehicle 101 returns, to an ordinary operation, an operation of transmitting the detection data D1. That is, the vehicle 101 returns to an operation of transmitting the detection data D1 to the server 102 in a case where the second certain time period has elapsed after the behavioral indication was received. The prediction data D2 that is output by the server 102 which has received the detection data D1 is also returned to the prediction data D2 after the above-described first certain time period (e.g., 600 msec). In contrast, in a case where it is determined that the error which is not less than the threshold has occurred between the future state and the current state, the vehicle 101 transmits the detection data D1 to the server 102 without waiting for arrival of the time at which subsequent detection data D1 is transmitted (after the second certain time period).

The server 102 that has received the detection data D1 uses the trained model 61 to output the prediction data D2 after a third certain time period (e.g., in a range of 200 msec to 300 msec) shorter than the second certain time period. Note that the third certain time period may be longer than the cycle in which the detection data D1 is acquired. Note also that the third certain time period may include the time period from when the server 102 transmits the prediction data D2 to when the vehicle 101 receives the prediction data. The server 102 carries out the simulation on the basis of the output prediction data D2 and generates the behavioral indication that indicates the state of the vehicle 101 after the third certain time period. The server 102 transmits the generated behavioral indication to the vehicle 101.

The vehicle 101 that has received the behavioral indication repeatedly determines whether the error which is not less than the threshold has occurred between the future state based on the behavioral indication received from the server 102 and the current state based on the detection data D1 acquired by the acquisition section 11. In a case where the state in which it is determined that the error which is not less than the threshold has not occurred is continued for the third certain time period, the vehicle 101 returns, to an ordinary operation, an operation of transmitting the detection data D1 after receiving a subsequent behavioral indication. The prediction data D2 that is output by the server 102 which has received the detection data D1 is also returned to the prediction data D2 after the above-described second certain time period (e.g., 350 msec to 450 msec). In contrast, in a case where it is determined that the error which is not less than the threshold has occurred between the future state and the current state, the vehicle 101 transmits the detection data D1 to the server 102 without waiting for arrival of the time at which subsequent detection data D1 is transmitted (after the third certain time period). Thereafter, the vehicle 101 and the server 102 repeat the operation as described earlier.

This reduces the volume of communication traffic between the vehicle 101 and the server 102 in a case where the vehicle 101 is in an expected state, and increases the volume of communication traffic to some degree in a case where an unexpected situation has occurred or continues occurring in the vehicle 101. However, the server 102 can understand the state of the vehicle 101 in real time.

### [Effect]

According to the above-described vehicle 101 in accordance with the present embodiment, the detection data D1 is transmitted to the server 102 so that the future state of the vehicle 101 is predicted on the server 102 side. This enables the server 102 to predict a distant future on the basis of a sufficient amount of the detection data D1 with higher accuracy and generate an accurate behavioral indication. Further, this makes it unnecessary, during a period until the predicted future is reached, to transmit data to the server 102, so that the volume of communication traffic between the vehicle 101 and the server 102 can be reduced. As a result, in the digital twin system 100 including the vehicle 101 and the server 102 that generates a digital twin of the vehicle 101, a reduction in volume of communication traffic between the vehicle 101 and the server 102 can be achieved without a decrease in accuracy of the digital twin.

### <Other embodiments>

All or part of the functions of the control blocks can be realized by a logic circuit. For example, the present invention encompasses, in its scope, an integrated circuit in which a logic circuit that functions as each of the control blocks is formed. Alternatively, the functions of the control blocks can be realized by, for example, a quantum computer.

### [Software Implementation Example]

The functions of the vehicle 101 and the server 102 (hereinafter, referred to as "device, etc.") can be realized by a program for causing a computer to function as the device, etc., the program causing the computer to function as the control blocks (in particular, the sections included in the vehicle side control section 1 and the server side control section 4) of the device. In this case, the device includes, as hardware for executing the program, a computer that includes at least one control device (e.g., a processor) and at least one storage device (e.g., a memory). The functions described in the foregoing embodiments are realized by executing the program with use of the control device and the storage device. The program may be recorded in one or more non-transitory computer-readable recording media. The one or more recording media may or may not be included in the device. In the latter case, the program may be made available to the device via any wired or wireless transmission medium.

Further, according to the above-described aspects of the present invention, it is possible to contribute to achievement of Goal 9 "Build resilient infrastructure, promote inclusive and sustainable industrialization and foster innovation." of Sustainable Development Goals (SDGs) by bringing about the foregoing effects. The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

- 100: Digital twin system
- 101: Vehicle
- 1: Vehicle side control section
- 11: Acquisition section
- 12: Determination section
- 13: First transmission control section
- 14: First reception control section
- 15: Judgment section
- 16: Second transmission control section
- 17: Output control section
- 2: Vehicle side communication section
- 3: Display section
- 102: Server
- 4: Server side control section
- 41: Second reception control section
- 42: Prediction section
- 43: Execution section
- 44: Third transmission control section
- 5: Server side communication section
- 6: Storage section
- 61: Trained model

## Claims

1. A vehicle comprising:
a plurality of sensors;
an acquisition section that acquires detection data from the respective plurality of sensors; and
a communication section that transmits, to a server, at least some of the detection data acquired by the acquisition section, the server using a trained model constructed by machine learning to predict a future state of the vehicle by input of the detection data, and that receives, from the server, a behavioral indication based on prediction,
after transmitting the detection data, the communication section transmitting subsequent detection data on the basis of a determination result indicating whether it is possible to transmit the subsequent detection data.

2. The vehicle as set forth in claim 1, further comprising a judgment section that judges whether traveling based on the behavioral indication received by the communication section is possible,
the communication section transmitting the detection data in a case where the judgment section judges that traveling based on the behavioral indication is impossible.

3. The vehicle as set forth in claim 1 or 2, further comprising an operation control section that, on the basis of the behavioral indication received by the communication section, automatically controls at least some of operations carried out by the vehicle, or an output control section that controls output of the behavioral indication.

4. The vehicle as set forth in any one of claims 1 to 3, further comprising a determination section that determines whether it is possible to transmit the detection data.

5. The vehicle as set forth in claim 4, wherein
the determination section determines, as whether it is possible to transmit the detection data, whether a time after a certain time period is reached, and
the communication section transmits the detection data to the server in a case where the determination section determines that the time after the certain time period is reached.

6. A server comprising:
a communication section that receives, from a vehicle including a plurality of sensors and an acquisition section that acquires detection data from the respective plurality of sensors, detection data output by the plurality of sensors;
a prediction section that uses a trained model constructed by machine learning to predict a future state of the vehicle on the basis of the detection data received by the communication section and that outputs a prediction result for the future state as prediction data; and
an execution section that carries out a simulation regarding a traffic condition on the basis of the received detection data and traffic data of a traffic participant,
after receiving the detection data, the communication section receiving subsequent detection data in accordance with a result of determining whether it is possible for the vehicle to transmit the subsequent detection data.

7. The server as set forth in claim 6, wherein, immediately before a time after a certain time period is reached, the prediction section requests the vehicle to transmit the detection data for new prediction.

8. The server as set forth in claim 6 or 7, wherein the communication section transmits, to at least one selected from the group consisting of the vehicle and a terminal device possessed by the traffic participant, a result of the simulation carried out by the execution section.
